# EUROPÄISCHE PATENTSCHRIFT

(11) **EP 1 277 081 B1**
(45) Veröffentlichungstag und Bekanntmachung des Hinweises auf die Patenterteilung: **27.07.2005**
(21) Anmeldenummer: 01936286.2
(22) Anmeldetag: 26.04.2001
(51) Int. Cl.: G02C 13/00

(54) **EINRICHTUNG ZUR BESTIMMUNG DER BRILLENGLAS-ZENTRIERDATEN**
DEVICE FOR DETERMINING SPECTACLE LENS CENTERING DATA
DISPOSITIF PERMETTANT DE DETERMINER LES DONNEES DE CENTRAGE DE VERRES DE LUNETTES

(30) Priorität: 27.04.2000 DE 10020697
(43) Veröffentlichungstag der Anmeldung: 22.01.2003
(73) Patentinhaber: Mothes, Frank, 85521 Ottobrunn-Riemerling (DE)
(72) Erfinder: Mothes, Frank, 85521 Ottobrunn-Riemerling (DE)
(74) Vertreter: Säger, Manfred, Dipl.-Ing.
(86) Internationale Anmeldenummer: PCT/EP2001/004745
(87) Internationale Veröffentlichungsnummer: WO 2001/084222

(56) Entgegenhaltungen:
- EP-A- 1 038 495
- DE-A- 4 023 631
- FR-A- 2 620 927
- FR-A- 2 663 528
- FR-A- 2 690 832
- US-A- 5 617 155

## Beschreibung

Die vorliegende Erfindung betrifft eine Einrichtung zur Bestimmung der Brillenglas-Zentrierdaten, d.h. der zur Anpassung optischer Gläser an ein Brillengestell notwendigen Parameter.

Unter den verschiedenen Parametern, die angepasst werden müssen, um die Brillengläser korrekt in das Brillensgestell einzupassen und die optischen Zentren der Gläser mit den visuellen Achsen der entsprechenden Augen in Deckung zu bringen, ist es üblich, den Pupillenabstand und die Höhe der Pupillen im Verhältnis zu dem Brillengestell zu kennen.

Es ist ebenfalls wichtig, die Höhe der optischen Zentren der Gläser im Verhältnis zu dem unteren oder oberen Rand des Brillengestells, in welches sie eingesetzt werden sollen, zu messen.

Die ganz alltägliche Verfahrensweise des Brillenoptikers - und damit der allgemein geläufige Stand der Technik - besteht darin, dass sich Optiker und Kunde gegenüber sitzen und dass der Kunde die Fassung seiner Wahl, mit einer Glasscheibe darin, aufgesetzt hat. Er wird dann gebeten, "in die Ferne zu blicken", und der Optiker zeichnet nach Augenschein auf der Scheibe oder auf einer Kontaktstrichfolie mit einem Kreuz den Durchblick an, wie er ihn beim gegenseitigen Anblick erkennt. Das Zentrierkreuz bestimmt dann die Lage des optischen Mittelpunktes des in die Fassung einzusetzenden Brillenglases.

Der Vorgang wird für jedes Auge einzeln vorgenommen (monokular), und so erhält man, gewissermassen empirisch, den Pupillenabstand PD, jedoch einschliesslich aller möglichen Ungenauigkeiten durch Parallaxe, Anzeichnungsfehler usw..

Aufgabe der vorliegenden Erfindung ist die Schaffung einer Einrichtung, die eine schnelle und möglichst präzise Ermittlung der erforderlichen Brillenglas-Zentrierdaten ermöglicht.

Diese Aufgabe wird erfindungsgemäss gelöst durch eine Einrichtung zur Bestimmung der Brillenglas-Zentrierdaten mit einem mittels einer Hubsäule höhenverstellbaren Gehäuse, das eine digitale Videokamera trägt, deren Objektiv zusammen mit einem Spiegel und einer Lichtquelle im Bereich der Frontfläche des Gehäuses angeordnet ist und mit einem, mit der digitalen Viedeokamera verbundenen Digitalcomputer, wobei der Kunde an einer markierten Stelle, vorzugsweise in etwa 3 m Entfernung, vor dem Spiegel mit einem bereits ausgesuchten Brillengestell Aufstellung nehmen kann und auf dem Brillengestell ein Aufsteckbügel aufsteckbar ist, welcher mit einer Visiereinrichtung ausgerüstet ist, die eine Skala aufweist, an der die Neigung der Brille ablesbar ist, wobei am Computerplatz über den Bildschirm die Kopfhaltung des Kunden und die Neigung der Brille überprüfbar sind, und der Aufsteckbügel in einem vorbestimmten Abstand, der dem durchschnittlichen Augenabstand entspricht, zwei Kalibrierpunkte aufweist, deren genaue Lage auf dem Bildschirm nach Einfrieren des Bildes des Kunden durch Ansteuern der einzelnen Kalibrierpunkte mittels eines automatisch auf dem Bildschirm erscheinenden quadratischen Kästchens und nachfolgende automatische Ermittlung des Helligkeits-Mittelpunktes der Kalibrierpunkte durch ein weitgehend automatisiertes Computerprogramm schnell und präzise bestimmbar ist, wobei im folgenden Programmschritt in analoger Weise durch Ansteuern mittels des vorgenannten quadratischen Kästchens auch die genaue Lage der auf dem Bildschirm abgebildeten beiden Reflexpunkte der Lichtquelle auf der Augenhornhaut durch automatische Ermittlung deren Hellligkeits-Mittelpunkte schnell und präzise bestimmbar ist.

Die erfindungsgemässe Einrichtung zeichnet sich insbesondere dadurch aus, dass die Datenermittlung durch die Verwendung der Reflexpunkte einer Lichtquelle im Apex der Cornia (Hornhaut) des rechten und des linken Auges sehr exakt erfolgt. Diese Reflexpunkte erhält man als praktisch punktförmiges Spiegelbild der Lichtquelle im Scheitel der Augenhornhaut. Die Lichtquelle der erfindungsgemässen Einrichtung besteht vorzugsweise aus einer Ringleuchte, die rings um den Rand des als Rundspiegel ausgebildeten Spiegels angeordnet ist. Auch kann die vorgenannte Lichtquelle aus zwei Leuchten bestehen, die jeweils an einer Seite des Spiegelrandes etwa in Höhe des Objektivs der Viedeokamera oder vorzugsweise etwa in einer Höhe unmittelbar oberhalb der Oberkante dieses Objektivs angeordnet sind.
Vorteilshafterweise weist die Visiereinrichtung des Aufsteckbügels eine vorzugsweise ein- und ausschaltbare Fixierleuchte, insbesondere in Form einer Leuchtdiode sowie eine mit einer Skala versehene Mattscheibe auf, vor der in einem vorbestimmten Abstand von vorzugsweise etwa 20 mm ein vorzugsweise kugelförmiges Korn der Visiereinrichtung angeordnet ist, wobei bei Beleuchtung des kugelförmigen Korns durch die Lichtquelle auf der Skala der Visiereinrichtung ein etwa punktförmiger Schatten entsteht, der zur Ablesung des Neigungswinkels der Brille verwendbar ist und wobei eine horizontale Linie der Skala, die vorzugsweise einem Neigungswinkel der Brille von etwa 11° entspricht als Normlinie dicker ausgebildet hervorgehoben ist und die oberhalb und unterhalb dieser Normlinie angeordneten weiteren horizontalen Skalenlinien jeweils einer Aenderung des Neigungswinkels der Brille um etwa 5° entsprechen. Durch die erfindungsgemässe Fixierleuchte auf dem Aufdeckbügel kann sichergestellt werden, dass bei einem Vermessungsabstand des Kunden zum Spiegel von vorzugsweise 3 m der Kunde seinen Blick auf das Spiegelbild der beleuchtenden Fixierleuchte im Spiegel richtet und damit auf einen realen Abstand von 6 m, sodass die Forderung nach entspanntem Sehen erfüllt ist, ausserdem kann die Vermessung auch im Prüfraum oder in Nebenräumen durchgeführt werden, ohne dass der allgemeine Kundenverkehr gestört wird.

Die Schnelligkeit des Messvorganges wird dadurch erreicht, dass der Computer so programmiert ist, dass die einzelnen Messschritte weitgehend automatisch ablaufen und insbesondere bei Beendigung eines Schrittes die für den nächsten Schritt erforderlichen Werkzeuge bzw. Hilfsmittel automatisch auf den Bildschirm erscheinen. Hierdurch wird der Benutzer durch das Messprogramm geleitet und der Messvorgang beschleunigt.

Das Hauptaugenmerk wurde insbesondere auf die schnelle und möglichst präzise Ermittlung der erforderlichen Zentrierdaten gelegt. Sehr wichtig ist dabei, dass die Handhabung problemlos ist und nach kurzer Einweisung von jedem Mitarbeiter durchgeführt werden kann. diese Forderungen konnten durch die erfindungsgemässe Einrichtung, welche sich nicht auf die bisherige Vermessungsmethode stützt, erfüllt werden. Die Erfindung baut darauf auf, dass man sich den Hornhautreflex einer in 3 Meter Entfernung stehenden Lichtquelle nutzbar macht. Dieses Reflexbild liefert uns einen exakten Bezugspunkt zur Erlangung der Zentrierdaten, während die Ermittlung der Messdaten mit Hilfe des Irisrandes nur Schätzwerte darstellen. Vorzugsweise werden bei der erfindungsgemässen Einrichtung bei der Bestimmung des Helligkeits-Mittelpunktes der Kalibrierpunkte des Aufsteckbügels und/oder der Reflexpunkte der Lichtquelle auf der Hornhaut der Augen durch das verwendetete quadratische Kästchen eine Vielzahl von, vorteilhafterweise etwa 10x10 bis 20x20, Bildpunkten des Computerbildschirms selektiert, wobei zur Ermittlung des Helligkeits-Mittelpunktes nur diejenigen Bildpunkte des quadratischen Kästchens ausgewählt werden, deren Helligkeit über einer von aussen wählbaren vorgegebene Schwelle liegt und die Auswertung über eine gewichtige Mittelwertbildung erfolgt, bei der eine erste Summe aus der Helligkeit der ausgewählten Lichtpunkte multipliziert mit der X-Koordinate, eine zweite Summe aus der Helligkeit der ausgewählten Bildpunkte multipliziert mit der Y-Koordinate und eine dritte Summe aus der Helligkeit ausgewählter Bildpunkte gebildet werden und wobei sich durch Division der ersten Summe durch die dritte Summe die X-Koordinate und durch Division der zweiten Summe durch die dritte Summe die Y-Koordinate des Helligkeits-Mittelpunktes ergeben.

Im folgenden wird die Erfindung anhand schematischer Zeichnungen an einem Ausführungsbeispiel näher erläutert. Es zeigt:
- Fig.1: eine Seitenansicht eines Ausführungsbeispieles eines Messstandes der erfindungsgemässen Einrichtung;
- Fig. 2: Eine Vorderansicht der in Fig. 1 in Seitenansicht dargestellten Hubsäule;
- Fig. 3: eine perspektivische Vorderansicht eines erfindungsgemässen Aufsteckbügels;
- Fig. 4: eine perspektivische Rückansicht des Aufsteckbügels gemäss Fig. 3;
- Fig. 5: einen vertikalen Teilschnitt längs einer Linie V - V der Fig. 3 in vergrössertem Massstab;

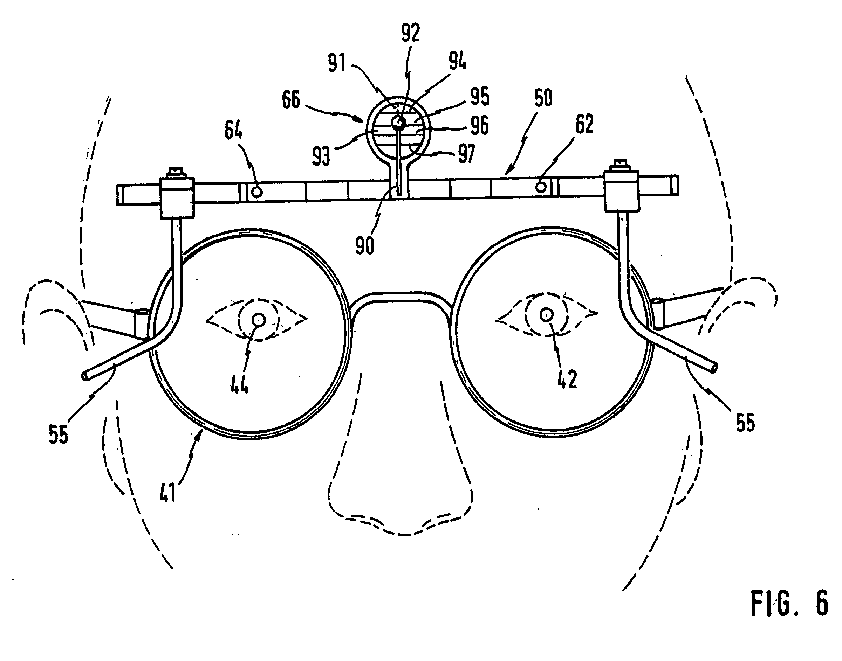

- Fig.6: eine Darstellung eines Computerbildes eines Kunden mit auf dem ausgewählten Brillengestell aufgestecktem Aufsteckbügel mach Ausrichten des Kopfes;

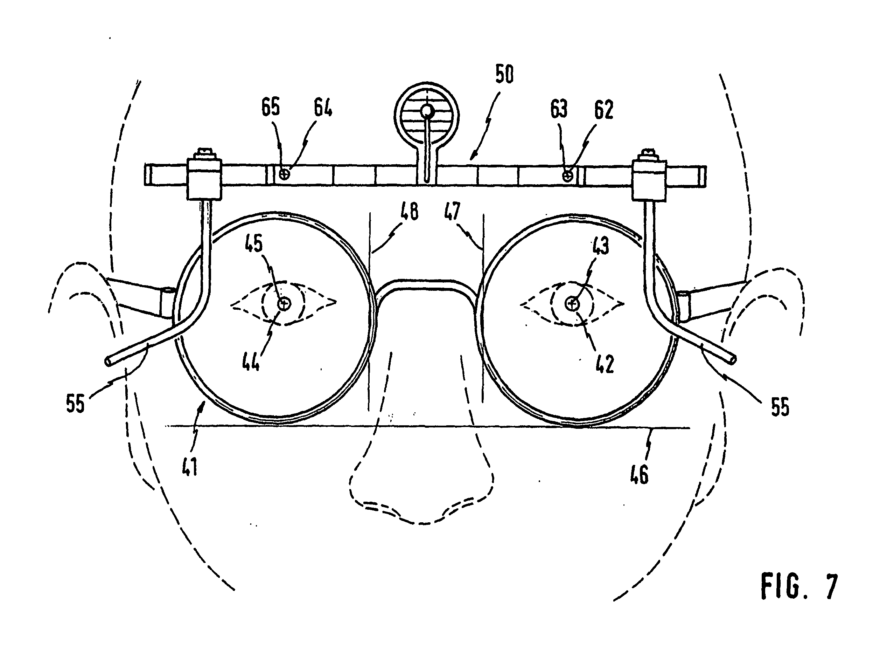

- Fig. 7: eine Darstellung ähnlich Fig. 6; nach Setzen der Messkreuze und Positionieren der horizontalen Messlinie am unteren Fassungsrand und der beiden vertikalen Messlinien am linken bzw. rechten inneren Fassungsrand;
- Fig. 8: eine Darstellung ähnlich Fig. 7 jedoch mit zusätzlichen Hilfslinien und dem Messergebnis;
- Fig. 9 und 10: stark schematisierte Darstellung von auf dem Monitor erscheinenden Schaltflächen bzw. Fenstern.

Zur Montage der erfindungsgemässen Einrichtung wird das Bodenteil 14 aufgestellt und mit dem feststehenden Teil 12 der Hubsäule verschraubt, dann wird die Frontfläche 26 mit dem Spiegel 22 vom Gehäuse 18 abgeschraubt und das Gehäuse 18 mit der Kamerahaltung und der Lichtquelle 24 auf den beweglichen Teil 16 der Hubsäule aufgeschraubt. Nachfolgend wird das Sromkabel (nicht dargestellt) mit dem Bodenteil 14 verbunden und das Computerkabel (nicht dargestellt) in die vorgesehene Steckerbuchse eingesteckt und ebenso der Stecker des Hubmotors eingesteckt. Schliesslich wird die digitale Videokamera mit ihrem Objekt 20 vorsichtig in die Kamerahalterung eingesetzt und festgeschraubt sowie die Videokamera mit Kamerakabel verbunden. Nach dem Festschrauben der Frontfläche 26, die den Spiegel 22 trägt, muss das System justiert werden, d.h., die Hubsäule 10 mit dem Spiegel 22 muss in der Höhe verfahren werden, bis die Mitte des Spiegels die Null-Blickrichtung 27 erreicht hat und der Kopf des Kunden muss jetzt in der Mitte des Spiegels sein, wie auch in der Mitte des Bildschirms. Sollte dies nicht der Fall sein, ist durch Verstellen der Justierung an der Kamerahalterung das Bild seitlich und gegebenenfalls auch in der Höhe entsprechend einzustellen. Die optische Achse 28 des Objektivs 20 der Videokamera, das eine Brennweite von 60 oder 70 mm haben kann, muss die Null-Blickrichtung 27 des Kunden im Bereich der Augen des Kunden schneiden, Bildschärfe und Helligkeit können an der Kamera eingestellt werden.

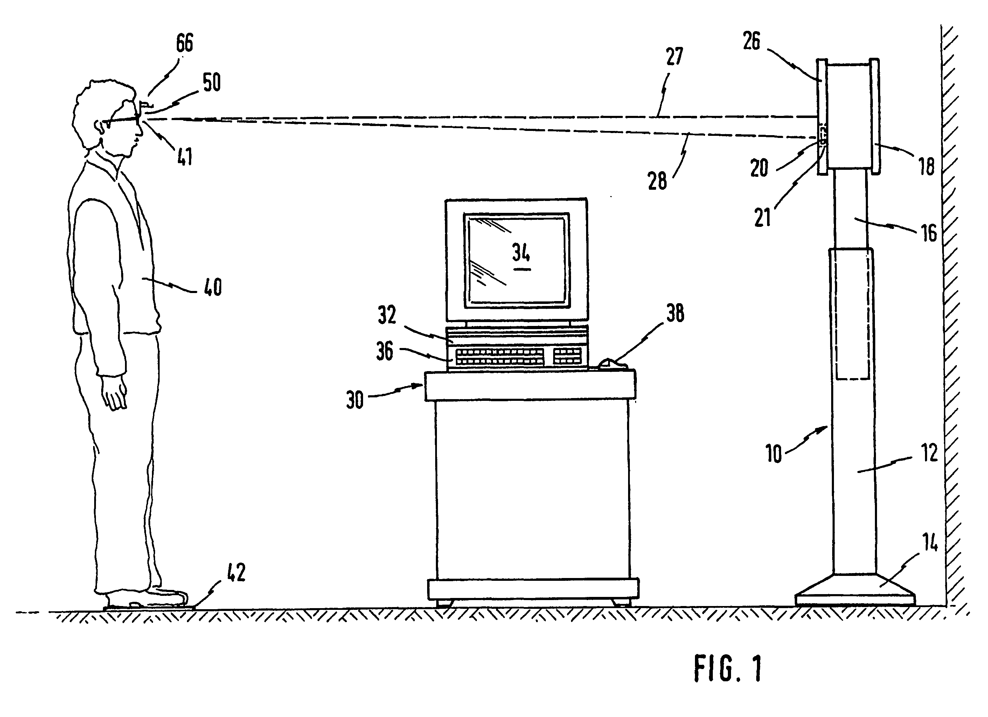

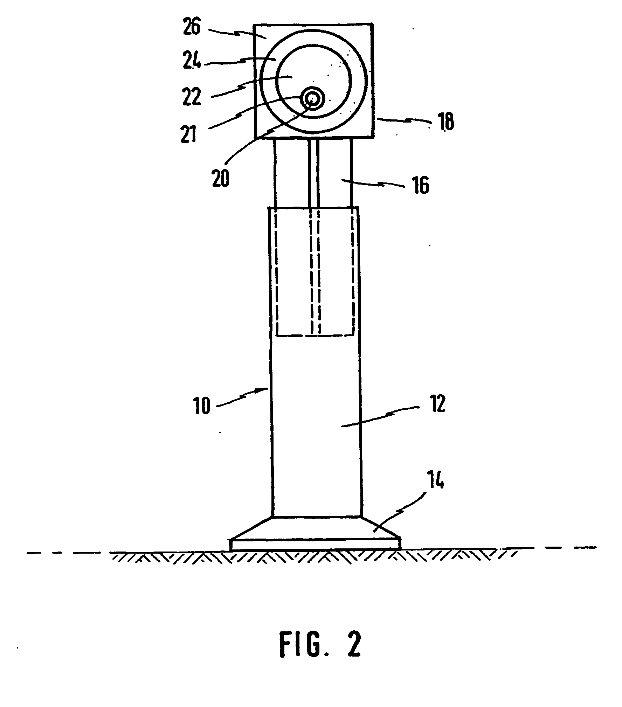

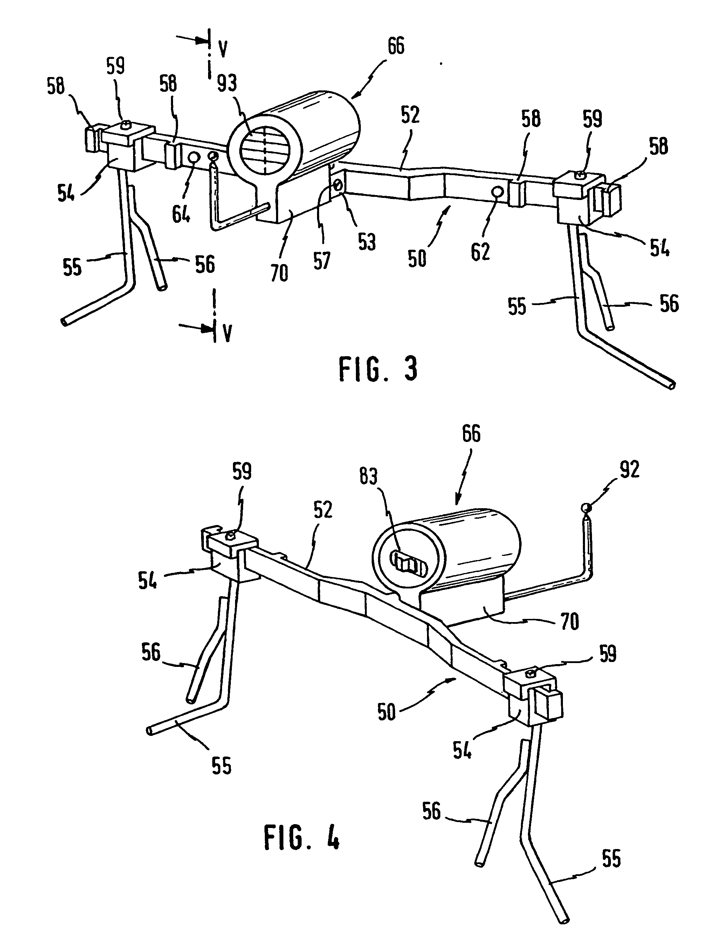

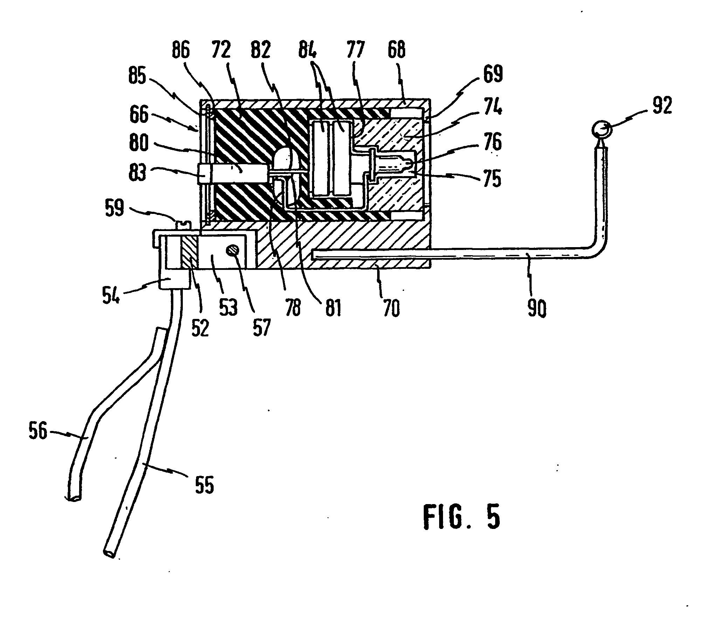

Nachdem alle Kabel (nicht dargestellt) der Einrichtung mit dem Computer 32 verbunden sind, erscheint nach dem Einschalten des Hautschalters auf dem Bildschirm 34 das Bild des aufzunehmenden Kunden 40, welcher an einer vorzugsweise durch Metallfüsse markierten Stelle 42 in ca. 3 m Entfernung vom Spiegel 22 der Hubsäule 10 steht (Fig. 1 und 2). Dem Kunden 40 wird auf die bereits angepasste Brille 41 ein Aufsteckbügel 50 aufgesetzt, welcher mit einer Visiereinrichtung 66 mit eine Leuchtdiode 76 als Fixierleuchte ausgestattet ist (Fig. 3 bis 5). Zur Visiereinrichtung 66 des Aufsteckbügels gehört noch ein Schalter 80 mit einem Betätigungshebel 83 und zwei Knopfzellen 84, die in einem Isolierteil 72 angeordnet sind, das selbst in einem allgemein hohlzylindrischen Bauteil 68 angeordnet ist. Auf der Vorderseite der Leuchtdiode befindet sich eine Skala 93, an der die Neigung der Brille mit Hilfe der horizontal verlaufenden Linie 94, 95, 96 und 97 ablesbar ist. Je mehr der Kunde den Kopf neigt, je tiefer senkt sich das kugelförmige Korn 92 der Visiereinrichtung 66 und je grösser wird der Neigungswinkel.

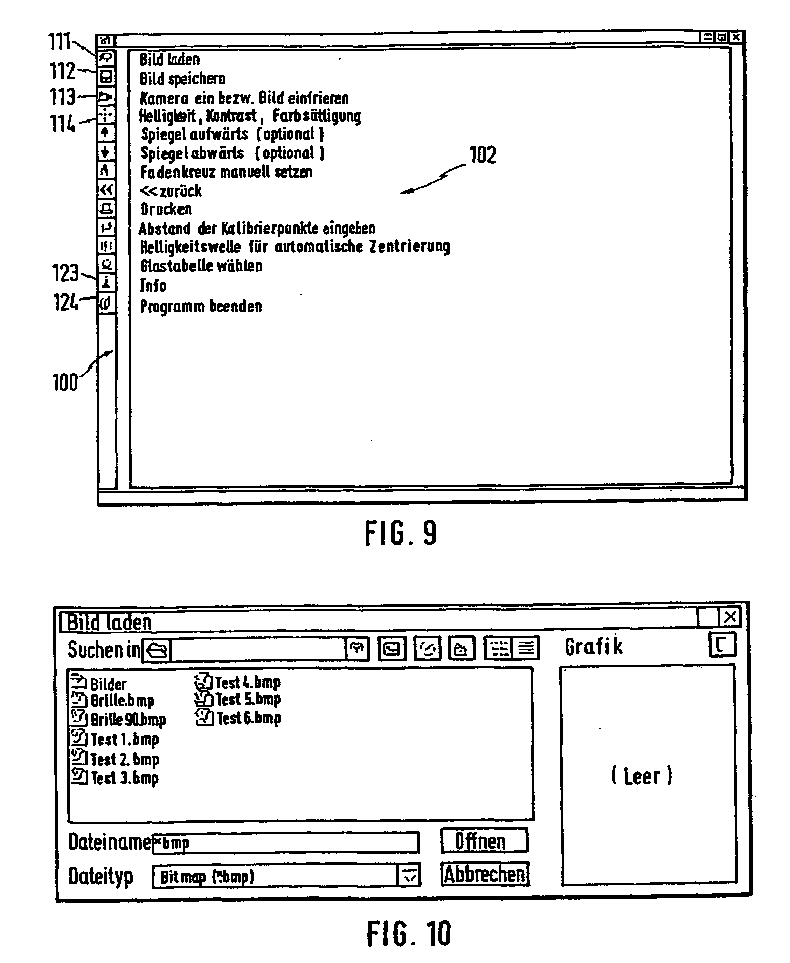

Vom Computerplatz 30 aus kann, insbesondere über den Bildschirm 34, überprüft werden, ob der Kunde 40 die richtige Kopfhaltung hat. Nach dem Positionieren des Kunden, ungefähr drei Meter mittig vor dem Spiegel 22, wird der Spiegels mittels der Hubsäule 10 auf- oder abwärts gefahren, bis das Gesicht des Kunden in der Mitte des Bildschirms zu sehen ist. Der Kunde soll entspannt über den Spiegel 22 die Fixierleuchte 76 betrachten. Durch Drehen des Kopfes soll die Fixierlinie am Aufsteckbügel so mittig eingestellt werden. Dadurch ist gewährleistet, dass das Gesicht parallel zum Spiegel steht. Nun wird durch Anklicken des Buttons "Bild einfrieren" (Fig. 9) das Bild eingefroren und die Messung kann durchgeführt werden.

Das Bild kann jetzt in Ruhe bearbeitet werden und der Kunde kann seinen Platz verlassen und die weitere Arbeit beobachten. Fährt man nun mit dem Mauszeiger nach rechts in das eingefrorene Bild, so verwandelt sich der Mauszeiger automatisch in ein quadratisches Kästchen. Mittels dieses quadratischen Kästchens werden z.B. 15x15 Bildpunkte des Bildschirms selektiert, die zur Ermittlung des Helligkeits-Mittelpunktes eines Kalibrierpunktes 62 bzw. 64 des Aufsteckbügel 50 oder des Helligkeitsmittelpunktes, der auf dem Bildschirm abgebildeten Lichtreflexe 42 bzw. 44 der Hornhaut der Augen dienen. Innerhalb dieses quadratischen Kästchens werden nur die Bildpunkte zur Auswertung herangezogen, deren Helligkeit über einer von aussen wählbaren, vorgegebenen Schwelle liegt. Die Auswertung erfolgt über eine "gewichtete" Mittelwertbildung. Hierzu werden von drei Merkmalen der auszuwertenden Bildpunkte die folgenden Summen gebildet:
1. Helligkeit multipliziert mit X-Koordinate
2. Helligkeit multipliziert mit Y-Koordinate
3. Helligkeit

Durch Division der Summe 1 durch die Summe 3 ergibt sich die X-Koordinate des Helligkeits-Mittelpunktes und durch Division der Summe 2 durch die Summe 3 ergibt sich die Y-Koordinate des Helligkeits-Mittelpunktes.

Das quadratische Kästchen wird nun über den linken Kalibrierpunkt (62) des Aufsteckbügels 50 positioniert, wobei der weisse Punkt 62 nicht unbedingt in der Mitte des Kästchens sein muss, er muss sich nur innerhalb des Kästchens befinden, an welcher Stelle ist egal.

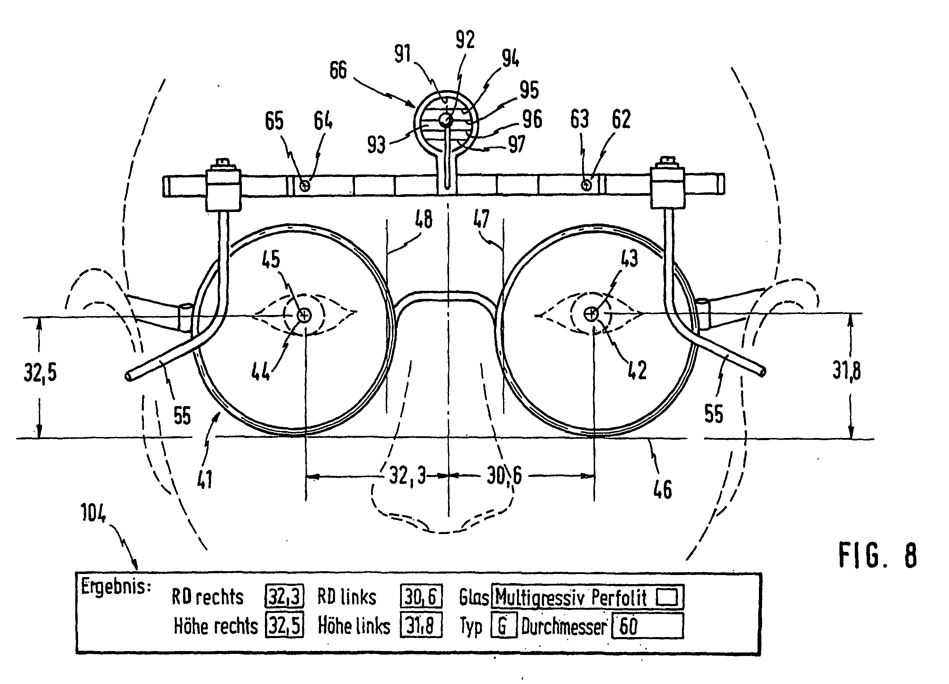

Durch Drücken der linken Maustaste sucht sich das Programm automatisch die Mitte des weissen Punktes 62 und setzt ein rotes Messkreuz 63. Danach fährt man zum nächsten Kalibrierpunkt 64 und wiederholt den Vorgang, so dass durch das Programm automatisch das Messkreuz 65 gesetzt wird. Nun fährt man zum weissen Reflexpunkt 42 im linken Auge und danach zum Reflexpunkt 44 im rechten Auge, so dass die Messkreuze 43 und 45 gesetzt werden. Wenn das rote Messkreuz 44 im rechten Auge gesetzt ist, erscheint automatisch eine horizontale Messlinie 46 und der Mauszeiger verwandelt sich in eine Hand. Dann bringt man die Messlinie 46 dazu, an den unteren Fassungsrändern der Brille 41 anzuliegen, indem die Maus aufwärts, abwärts oder nach links und rechts bewegt wird. Danach klickt man die linke Maustaste und eine vertikale Messlinie 47 erscheint, die mit der Maus am linken inneren Fassungsrand positioniert wird. Danach klickt man die linke Maustaste und positioniert die nun erscheinende zweite vertikale Messlinie 48 am rechten inneren Fassungsrand. Durch Klicken der linken Maustaste wird der Messvorgang abgeschlossen und die Messergebnisse werden am unteren Bildschirmrand, wie bei 104 in Fig. 8 dargestellt, angezeigt. Angegeben werden die beiden Mittenabstände RD für das rechte und für das linke Auge und auch die Höhen von Glasunterkante zu den Messpunkten 43 bzw. 45 und damit die notwendigen Daten, um eine exakt zentrierte Brille anfertigen zu können.

Bei dem in Fig. 9 dargestellten Bildschirm befindet sich am linken Bildschirmrand eine Leiste 100 mit Schaltflächen (Buttons) 111 bis 124 und zugehörigen Erläuterungen 102, die jedoch nur insoweit sichtbar werden, wie eine Schaltfläche mit dem Mauszeiger angesteuert und aktiviert wird, indem der Mauszeiger auf dem Button positioniert und mit der linken Maustaste angeklickt wird.

Mit der Schaltfläche 111 "Bild laden"" können früher gespeicherte Bilder wieder augerufen werden. Bei Anklicken dieses Buttons erscheint das in Fig. 10 dargestellte Fenster. Die Namen aller bisher gespeicherten Bilder werden angezeigt. Bei Anklicken eines Namens wird auf der rechten Seite des Fensters zur leichteren Orientierung eine Vorschau des Bildes angezeigt.

Mit Doppelklick oder durch Anwählen des Punktes "Oeffnen" wird das Bild am Hauptbildschirm mit allen Messwerten angezeigt.

Durch Anklicken der Schaltfläche 112 "Bild speichern" können von der Kamera aufgenommene Bilder abgespeichert werden.

Die Bilder können mit oder ohne Messwerte gespeichert werden, abhängig davon, ob das Speichern vor oder nach Vermessung der Augen erfolgt.

Nach der Vermessung kann auch durch Anwählen des Punktes "OK" abgespeichert werden.

Durch Anwählen der Schaltfläche 113 "Kamera ein bzw. Bild einfrieren", wird die Kamera eingeschaltet. Das Gesicht des Kunden wird nun auf dem Bildschirm angezeigt. Der Spiegel 22 muss je nach Position nach oben oder nach unten bewegt werden, bis sich das Gesicht auf der Bildschirmmitte befindet. Durch erneutes Drücken des Button wird das Bild eingefroren und das Vermessen kann erfolgen.

Die Schaltfläche 114 "Helligkeit, Kontrast und Farbsättigung" erlaubt es, Helligkeit, Kontrast und Farbsättigung einzustellen.

Hierbei kann bei ungünstigen Lichtverhältnissen die Qualität des Bildes verbessert werden. Normalerweise ist dies aber nicht notwendig.

Durch Anklicken der Schaltfläche 115 "Spiegel abwärts" kann der Spiegel abwärts bewegt werden.

Durch Anklicken der Schaltfläche 116 "Spiegel abwärts" kann der Spiegel abwärts bewegt werden.

Die Schaltfläche 117 betrifft das manuelle Setzen des Fadenkreuzes. Falls Probleme mit der automatischen Mittenzentrierung auftreten, kann das Messkreuz nach Anwählen der Schaltfläche 117 manuell gesetzt werden. Beim nächsten Messpunkt wird wieder auf automatische Mittenzentrierung gewechselt.

Durch Anklicken der Schaltfläche 118 "zurück" geht der Computer zum Beginn des Messvorganges zurück. Alle Daten, die seit Beginn der Messung ermittelt wurden, werden verworfen.

Durch Anklicken der Schaltfläche 119 "Drucken" werden das Bild und die Messwerte ausgedruckt, falls ein Drucker angeschlossen ist.

Die Schaltfläche 120 "Abstand der Kalibrierpunkte eingeben" muss nur bei Verwendung eines neuen Aufsteckbügels 50 und bei der ersten Inbetriebnahme der Einrichtung durchgeführt werden. Der Abstand der Kalibrierpunkte kann eingegeben werden.

Durch Anklicken der Schaltfläche 121 "Helligkeitsschwelle für automatische Zentrierung" kann die Ansprechschwelle verändert werden, falls bei ungünstigen Lichtverhältnissen Probleme mit der automatischen Zentrierung auftreten. Normalerweise ist dies aber nicht nötig.

Durch Anklicken der Schaltfläche 122 "Glastabelle wählen" kann die Glastabelle eines bestimmten Herstellers gewählt werden. Durch Doppelklick auf den Herstellernamen oder durch Eingabe des Namens wird die Glastabelle übernommen. "Glastabelle wählen", kann die Glastabelle übernommen.

Bei Anwählen der Schaltfläche 123 erscheinen die Copyrightbestimmungen.

Durch Anwählen der Schaltfläche 124 "Programm beenden" wird das Programm beendet.

Vor dem Ausschalten muss der Computer in vorgeschriebener Weise heruntergefahren werden.

Ein wesentlicher Vorteil der erfindungsgemässen Einrichtung besteht darin, dass durch die Benutzung des Spiegels 22 sich der Abstand verdoppelt, derart dass auch bei beengten Räumlichkeiten ein Abstand von 6 Metern erreichbar ist und dadurch eine nahezu Parallelstellung der Augachsen erzielt wird.

Da die Blickrichtung des Kunden exakt in das Zentrum des Spiegels 22, der von der Ringleuchte 24 umrandet ist gerichtet ist, erhält man eine Abbildung der Ringleuchte in Form eines hellen Punktes auf der Hornhaut der Augen. Mit diesen Reflexpunkten lässt sich auf dem Computerbild eine, in seiner Exaktheit kaum zu übertreffende Punktgenauigkeit der Reflexpunkte und des Abstandes derselben messen.

Der Aufsteckbügel 50 besitzt einen Träger 52, auf dem zwischen Anschlägen 58 mit federnden Armen 55, 56 versehene Halterteile 54 verschiebbar und mittels Schrauben 59 feststellbar sind und der mit einer Lasche 53 und einer Schraube 57 mit dem Vorsprung 70 der Visiereinrichtung 66 verbunden ist, deren Leuchtdiode 76 in der Ausnehmung 75 des lichtdurchlässigen Zylinders 74 angeordnet ist und mit ihren Anschlussdrähten 77 und 78 mit dem einen Pol der Batterie 84 bzw. dem Stift 81 des Schalters 80 verbunden ist, dessen zweiter Stift 82 an dem anderen Pol der Batterie anliegt, wobei der eine axial gerichtete Federkraft ausübende Federring 86, der sich an einer Seite an dem Klemmring 85 abstützt, die Bauteile 72, 80, 84 und 74 axial zusammen und vor gegen den Ringbund 69 des Hohlzylinders 68 drückt.

## Patentansprüche

1. Einrichtung zur Bestimmung der Brillenglas-Zentrierdaten mit einem mittels einer Hubsäule (10) höhenverstellbaren Gehäuse (18), das eine digitale Videokamera trägt, deren Objektiv (20) zusammen mit einem Spiegel (22) und einer Lichtquelle (24) im Bereich der Frontfläche (26) des Gehäuses (18) angeordnet ist und mit einem, mit der digitalen Videokamera verbundenen Digitalcomputer (32), wobei der Kunde (40) an einer markierten Stelle (42), vorzugsweise in etwa 3 m Entfernung, vor dem Spiegel (22) mit einem bereits ausgesuchten Brillengestell (41) Aufstellung nehmen kann, und mit einem auf dem Brillengestell (41) aufsteckbaren Aufsteckbügel (50), welcher mit einer Visiereinrichtung (66) ausgerüstet ist, die eine Skala (93) aufweist, an der die Neigung der Brille (41) ablesbar ist, wobei am Computerplatz (30) über den Bildschirm (34) die Kopfhaltung des Kunden (40) und die Neigung der Brille (41) überprüfbar sind, und der Aufsteckbügel (50) in einem vorbestimmten Abstand, der dem durchschnittlichen Augenabstand entspricht, zwei Kalibrierpunkte (62, 64) aufweist, deren genaue Lage auf dem Bildschirm (34) nach Einfrieren des Bildes des Kunden durch Ansteuern der einzelnen Kalibrierpunkte (62 bzw. 69) mittels eines automatisch auf dem Bildschirm (34) erscheinenden quadratischen Kästchens und nachfolgender automatischer Ermittlung ihres jeweiligen Helligkeitsmittelpunktes durch ein weitgehend automatisiertes Computerprogramm schnell und präzise bestimmbar ist, wobei im folgenden Programmschnitt in analoger Weise durch Ansteuern mittels des vorgenannten quadratischen Kästchens auch die genaue Lage der auf dem Bildschirm (34) abgebildeten Reflexpunkte (42, 44) der Lichtquelle (24) auf der Augenhornhaut durch automatische Ermittlung deren Helligkeits-Mittelpunkte präzise bestimmbar ist.

2. Einrichtung nach Anspruch 1, **dadurch gekennzeichnet, dass** die Lichtquelle aus einer Ringleuchte (24) besteht, die um den Rand des als Rundspiegel ausgebildeten Spiegels (22) angeordnet ist, oder aus zwei Leuchten besteht, die jeweils an einer Seite des Spiegelrandes etwa in Höhe des Objektivs (20) der Videokamera oder vorzugsweise etwa in Höhe unmittelbar oderhalb der Oberkante des Objektivs (20) der Videokamera angeordnet sind.

3. Einrichtung nach Anspruch 1 oder 2 **dadurch gekennzeichnet, dass** die Visiereinrichtung (66) des Aufsteckbügels (50) eine vorzugsweise ein- und ausschaltbare Fixierleuchte, insbesondere in Form einer Leuchtdiode (76) aufweist sowie eine mit einer Skala (93) versehene Mattscheibe, vor der in einem vorbestimmten Abstand von vorzugsweise etwa 20 mm ein vorzugsweise kugelförmiges Korn (92) der Visiereinrichtung (60) angeordnet ist, wobei bei Beleuchtung des kugelförmigen Korns (92) durch die Lichtquelle (24) auf der Skala (93) der Visiereinrichtung (66) ein etwa punktförmiger Schatten entsteht, der zur Ablesung des Neigungswinkels der Brille verwendbar ist und wobei eine horizontale Linie (95) der Skala (93), die vorzugsweise einem Neigungswinkel der Brille (41) von etwa 11° entspricht als Normlinie dicker ausgebildet hervorgehoben ist und die oberhalb und unterhalb dieser Normlinie angeordneten weiteren horizontalen Skalenlinien (94, 96, 97) jeweils einer Aenderung des Neigungswinkels der Brille um etwa 5° entsprechen.

4. Einrichtung gemäss einer oder mehrerer Ansprüche 1 bis 3, **dadurch gekennzeichnet, dass** das bei der Bestimmung des Helligkeits-Mittelpunktes der Kalibrierpunkte (62, 64) des Aufsteckbügels (50) und/oder der Reflexpunkte (42, 44) der Lichtquelle (24) auf der Hornhaut der Augen durch das verwendete quadratische Kästchen eine Vielzahl von, vorzugsweise etwa 10x10 bis 20x20, Bildpunkten des Computerbildschirms (34) selektiert werden, wobei zur Ermittlung des Helligkeits-Mittelpunktes nur diejenigen Bildpunkte des quadratischen Kästchens ausgewählt werden, deren Helligkeit über einer von aussen wählbaren vorgegebenen Schwelle liegt und die Auswertung über eine gewichtete Mittelwertbildung erfolgt, bei der eine erste Summe aus der Helligkeit der ausgewählten Bildpunkte multipliziert mit der X-Koordinate, eine zweite Summe aus der Helligkeit der ausgewählten Bildpunkte multipliziert mit der Y-Koordinate und eine dritte Summe aus der Helligkeit ausgewählter Bildpunkte gebildet werden und wobei sich durch Division der ersten Summe durch die dritte Summe die X-Koordinate und durch Division der zweiten Summe durch die dritte Summe die Y-Koordinate des Helligkeits-Mittelpunktes ergeben.

## Claims

1. Device for determining spectacle-lens centring data comprising a housing (18), which is height adjustable by means of a lifting column (10), and which contains a digital video camera, of which the object lens (20) is arranged, together with a mirror (22) and a light source (24), in the region of the front surface (26) of the housing (18), and comprising a digital computer (32) connected to the digital camera, wherein the customer (40) can stand at a marked position (42), preferably at a distance of approximately three metres in front of the mirror (22) with an already-selected spectacle frame (41), and comprising a clip attachment (50) capable of being clipped onto the spectacle frame (41), the clip attachment being fitted with an sighting device (66), which provides a scale (93), from which the inclination of the spectacle frame (41) can be read off, wherein the attitude of the head of the customer (40) and the inclination of the spectacle frame (41) can be monitored at the computer station (30) via the screen (34), and wherein the clip attachment (50) provides two calibration points (62, 64) at a predetermined distance, which corresponds to the average distance between the eyes, the exact position of which calibration points on the screen (34) can be rapidly and accurately determined, after the image of the customer has been frozen, by controlling the individual calibration points (62 and 64 respectively) by means of a rectangular box appearing automatically on the screen and subsequent, automatic determination of their relevant centre-point of brightness using a largely automated computer program, wherein the exact position of the reflection points (42, 44) of the light source (24) on the cornea of the eye imaged on the screen (34) can also be accurately determined in an analogous manner in the subsequent section of the program by automatic determination of their centre-points of brightness.

2. Device according to claim 1, **characterised in that** the light source consists of an annular lamp (24) arranged around the edge of the mirror (22), which is designed as a round mirror, or which consists of two lamps arranged at each side of the mirror edge at approximately the height of the object lens (20) of the video camera or preferably at approximately the height directly above the upper edge of the object lens (20) of the video camera.

3. Device according to claim 1 or 2, **characterised in that** the sighting device (66) of the clip attachment (50) provides a positioning lamp, especially in the form of a light-emitting diode (76), preferably capable of being switched on and off, and a ground-glass screen provided with a scale (93), in front of which a preferably spherical sight (92) of the sighting device (60) is arranged at a predetermined distance of preferably approximately 20 mm, wherein, when the spherical sight (92) is illuminated by the light source (24), an approximately point-shaped shadow appears on the scale (93) of the sighting device (66), which can be used for reading off the angle of inclination of the spectacle frame, and wherein a horizontal line (95) of the scale (93), which preferably corresponds to an angle of inclination of the spectacle frame (41) of approximately 11°, is emphasised as a standard line being formed more boldly, and the other horizontal scale lines (94, 96, 97) disposed above and below this standard line each correspond to a change in the angle of inclination of the spectacle frame of approximately 5°.

4. Device according to one or more of claims 1 to 3, **characterised in that**, in determining the centre-point of brightness of the calibration points (62, 64) of the clip attachment (50) and/or of the reflection points (42, 44) of the light source (24) on the cornea of the eyes using the rectangular box, a plurality, preferably approximately 10x10 to 20x20, pixels of the computer screen (34) are selected, wherein, in order to determine the centre-point of brightness, only those pixels of the rectangular box are chosen, of which the brightness is disposed above a predetermined, externally-selectable threshold, and wherein the evaluation takes place via a weighted averaging, in which a first sum of the brightness of the selected pixels multiplied by the x-coordinate is formed, a second sum of the brightness of selected pixels multiplied by the y-coordinate is formed and a third sum of the brightness of selected pixels is formed, and wherein the x-coordinate is derived by dividing the first sum by the third sum, and the y-coordinate of the centre-point of brightness is derived by dividing the second sum by the third sum.

## Revendications

1. Dispositif de détermination des données de centrage de verre de lunettes, le dispositif comportant
un boîtier (18), qui est réglable en hauteur au moyen d'une colonne de levage (10) et qui supporte une caméra vidéo numérique dont l'objectif (20) est disposé conjointement avec un miroir (22) et une source lumineuse (24) dans la région de la surface frontale (26) du boîtier (18), et
un ordinateur (32) relié à la caméra vidéo numérique,
le client (40) pouvant se placer devant le miroir (22) à un endroit repéré (42), avantageusement à 3 m de distance environ, en portant une monture de lunette (41) déjà choisie (41), et un étrier de montage (50) qui peut être placé sur la monture de lunette (41) et qui est équipé d'un dispositif de visée (66) qui comporte une échelle graduée (93) sur laquelle l'inclinaison des lunettes (41) peut être lue, le port de tête du client (40) et l'inclinaison les lunettes (41) pouvant être vérifiés sur l'écran (34) de l'ordinateur (30) et l'étrier de montage (50) comportant, à une distance prédéterminée qui correspond à l'écartement moyen des yeux, deux points d'étalonnage (62, 64) dont la position précise sur l'écran (34) peut être déterminée de façon rapide et précise après avoir figé l'image du client en commandant les points d'étalonnage individuels (62 respectivement 69) au moyen d'un boîtier carré apparaissant automatiquement sur l'écran (34) et en déterminant ensuite automatiquement son point médian de luminosité respective par un programme informatique quasiment automatisé, la position précise des points de réflexion (42, 44), représentés sur l'écran (34), de la source lumineuse (24) sur la cornée pouvant être déterminée de façon précise en déterminant automatiquement leurs points médians de luminosité dans la section de programme suivante de façon analogue par une commande au moyen de la boîte carrée susmentionnée.

2. Dispositif selon la revendication 1, **caractérisé en ce que** la source lumineuse est constituée d'une lampe annulaire (24) qui est placée autour du bord du miroir (22) conformé en miroir sphérique ou de deux lampes qui sont placées chacune sur un côté du bord du miroir à peu près à hauteur de l'objectif (20) de la caméra vidéo ou avantageusement à peu près à une hauteur immédiatement au-dessus du bord supérieur de l'objectif (20) de la caméra vidéo.

3. Dispositif selon la revendication 1 ou 2, **caractérisé en ce que** le dispositif de visée (66) de l'étrier de montage (50) comporte une lampe de fixation, pouvant avantageusement être allumée et éteinte et se présentant en particulier sous la forme d'une diode luminescente (76), ainsi qu'un disque mat doté d'une échelle graduée (93) en avant duquel est placé un nodule (92), avantageusement sphérique, du dispositif de visée (66) à une distance prédéterminée, une ombre à peu près ponctuelle étant générée sur l'échelle graduée (93) du dispositif de visée (66) lorsque le nodule sphérique (92) est éclairé par la source lumineuse (24) et pouvant être utilisée pour lire l'angle d'inclinaison des lunettes, et une ligne horizontale (95) de l'échelle graduée (93), qui correspond avantageusement à un angle d'inclinaison des lunettes (41) d'environ 11°, étant mis en évidence en la rendant plus épaisse qu'une ligne normale et les autres lignes horizontale (94, 96, 97) de l'échelle graduée, qui sont placées au-dessus et au-dessous de cette ligne normale, correspondant chacune à une variation de l'angle d'inclinaison des lunettes d'environ 5°.

4. Dispositif selon une ou plusieurs des revendications 1 à 3, **caractérisé en ce qu'**un grand nombre de points d'image, avantageusement environ 10 x 10 à 20 x 20, de l'écran d'ordinateur (34) sont choisis lors de la détermination du point médian de luminosité des points d'étalonnage (62, 64) de l'étrier de montage (50) et/ou des points de réflexion (42, 44) de la source lumineuse (24) sur la cornée des yeux par la boîte carrée utilisée, seuls les points d'image de la boîte carrée, dont la luminosité se trouve au-dessus d'un seuil prédéterminé pouvant être choisi de l'extérieur, étant choisis pour déterminer le point médian de luminosité et l'exploitation étant effectuée en formation une valeur moyenne pondérée pour laquelle une première somme est formée à partir de la luminosité des points d'image choisis multipliée par la coordonnée X, une deuxième somme est formée à partir de la luminosité des points d'image choisis multipliés par la coordonnée Y et une troisième est formée à partir de la luminosité de points d'image choisis, et la coordonnée X étant obtenu en divisant la première somme par la troisième somme et la coordonnée Y du point médian de luminosité étant obtenu en divisant la deuxième somme par la troisième somme.
